# EUROPÄISCHE PATENTSCHRIFT

(11) **EP 0 623 278 B1**
(45) Veröffentlichungstag und Bekanntmachung des Hinweises auf die Patenterteilung: **04.09.1996**
(21) Anmeldenummer: 94102632.0
(22) Anmeldetag: 22.02.1994
(51) Int. Cl.: A01G 25/09

(54) **Verfahren und Vorrichtung zur vollkontinuierlichen, gezielten und verlustfreien Bewässerung von in Reihen angeordneten Pflanzen und Kulturen**
Process and device for the continuous, adjusted and waste free irrigation of plants and cultures in rows
Procédé et dispositif pour l'irrigation continue, précise et sans perte de plantes et cultures en rangées

(30) Priorität: 04.05.1993 DE 9306732 U
(43) Veröffentlichungstag der Anmeldung: 09.11.1994
(73) Patentinhaber: THOMAS SCHMIDMEIER RAINBOW BEWÄSSERUNGSSERVICE, D-93197 Zeitlarn/Ödenthal (DE)
(72) Erfinder: THOMAS SCHMIDMEIER RAINBOW BEWÄSSERUNGSSERVICE, D-93197 Zeitlarn/Ödenthal (DE)

(56) Entgegenhaltungen:
- DE-A- 2 058 154
- DE-A- 2 137 312
- DE-C- 3 512 765
- FR-A- 1 354 505
- FR-A- 2 592 311
- GB-A- 1 549 882
- US-A- 4 515 311

## Beschreibung

Es ist bereits bekannt, in Reihen und im Abstand zueinander angeordnete Pflanzen, z.B. in Blumenkübeln oder auch Kulturen an Strassenbegrenzungen, Alleen, Wegen, in urbanen Anlagen zur Verkehrsberuhigung usw., mit maschinell arbeitenden Vorrichtungen in bestimmten Zeitabständen zu begießen bzw. zu tränken, um so ein kontinuierliches Wachstumsbild und eine möglichst stetige Flora zu erzeugen bzw. zu erhalten.

So beschreibt z.B. die DE-OS 40 16 545 einen Gießwagen, der zur gleichzeitigen Bewässerung von in mehreren Reihen angeordneten Pflanzen, z.B. von Blumenbeeten mit dazwischen angeordneten Wegen, vorgesehen ist. Ein derartiger Giesswagen besteht im wesentlichen aus einem die Pflanzenreihen überbrückenden, in Richtung der Pflanzenreihen verfahrbaren Ausleger in Form eines dreidimensionalen Fachwerks mit einem wasserführenden Rohr und an diesem angebrachten Bewässerungsdüsen. Der Ausleger weist schienenartige Führungsmittel auf zur Führung eines quer zu den Pflanzenreihen in Richtung des Auslegers verfahrbaren Zusatzgerätes. Der Giesswagen bzw. die Vorrichtung ist speziell zur Bewässerung großflächiger Pflanzenbeete ausgelegt, indem der Ausleger in der Horizontalen bis über die gesamte Beetbreite beidseitig des Gießwagens ausgefahren werden kann.

Die DE-OS 39 40 049 betrifft eine Einrichtung zur dosierten Zufuhr eines flüssigen Mediums an eine Pflanze. Diese Einrichtung besteht aus einem an einer Zufuhrleitung angeschlossenen Vorratsbehälter, in den das flüssige Medium über ein Einlaßventil eingebracht werden kann und wechselweise über ein zum Einlaßventil an der Pflanze orientiertes Auslaßventil ausbringbar ist. Dieses bekannte System strebt eine dosierte Abgabe des flüssigen Mediums an eine Pflanze an, wozu eine ganz spezifische, keineswegs unkomplizierte Düsenform bzw. Düsenkombination erforderlich ist.

Die DE-OS 40 26 194 betrifft ebenfalls eine Vorrichtung, speziell einen Gießwagen - und ein Verfahren - zum Gießen und Bewässern einer Vielzahl von rasterartig angeordneten Pflanzen, speziell Topfpflanzen. Die Begießung erfolgt mit Hilfe eines taktweise verfahrbaren Wagens mit brückenartigem Aufbau über an diesem Aufbau angeordneten Bewässerungsdüsen. Durch an dem brückenartigen Aufbau angebrachte Bohreinrichtungen werden für die Topfpflanzen rasterförmig Löcher in das Erdreich gebohrt, wonach die Topfpflanzen auf dem Aufbau über die Bohrlöcher transportiert, dort positioniert und definiert in die Bohrlöcher abgesetzt werden. Anschließend erfolgt die Bewässerung.

Die DE-PS 37 38 518 beschreibt eine an einem Fahrzeug angeordnete Spritzvorrichtung, die für jede zu spritzende, d.h. zu bewässernde Pflanzenzeile einen Durchlaß aufweist, der von zwei seitlich am Fahrzeug im Abstand angeordneten Abschirmungen sowie zwei Düseneinheiten begrenzt ist. Hierdurch soll eine bessere Ausnutzung des Spritzmittels selbst dann erreicht werden, wenn die zu spritzenden -oder auch zu bewässernden- Pflanzen bereits viel Laub entwickelt haben.

Aus der DE-PS 35 12 765 ist eine Vorrichtung zum Gießen von Beeten und Pflanzen insbesondere in öffentlichen Anlagen bekannt, wobei die Vorrichtung aus einem auf einem Kraftfahrzeug montierten Tank, einem an der Vorderseite des Kraftfahrzeugs befestigten, teleskopisch ausfahrbaren Arm -der mittels Fluiddruck betätigter Zylinder-Kolben-Aggregate heb- und senkbar sowie horizontal schwenkbar ist- sowie einem an dem Schwenkarm angeordneten Gieß- bzw. Sprühkopf besteht. Der Arm ist an einem vertikalen Ständer angebracht, der seinerseits am Fahrzeug anliegt. Dem in diesem Stand der Technik beschriebenen Gerät bzw. der Vorrichtung wird insbes. eine vorteilhaft hohe Wendigkeit in engen Durchfahrtbereichen bescheinigt. Wie im besagten Stand der Technik klar ausgewiesen, ist die Vorrichtung vorzugsweise als Anbaugerät für ein handelsübliches Mehrzweckfahrzeug gedacht, wozu der Ständer an einer Konsole befestigt ist, die an die Vorderseite des Nutzfahrzeugs angebracht wird.

Eine ähnliche Vorrichtung bzw. Anlage ist auch aus der US-PS 3 055 594 bekannt, bei der der sogenannte Arm aus drei Teilstücken besteht, die hydraulisch um je eine horizontale Achse heb- und senkbar sind. Auch dieser Arm mündet in einer Düse bzw. einem Gieß- bzw. Sprühkopf. Die aus dem Stand der Technik bekannten Vorrichtungen haben entweder den Nachteil einer erheblichen Sperrigkeit durch komplexen Aufbau und damit nur geringe Wendigkeit bzw. Flexibilität in engen bzw. schmalen Anlagen, verbunden mit vorwiegend nur in einer Ebene möglichen, vorwiegend großflächigen Verwendung, oder sie erfordern neben einer erheblichen Anhäufung mechanischer Elemente für Transport, Montage, Betrieb am Einsatzort sowie Bedienungspersonal einen wenig und kaum erschöpfenden, weil nicht gezielten Wasserverbrauch und einen unökonomischen Betrieb mit unökonomischer Wirkung, da die einzelne Pflanze nur bedingt allein und ausschließlich bewässert wird und erhebliche Wassermengen durch Erfassung der Umgebung der Pflanze verloren gehen.

Von wenigen bekannten Vorrichtungen abgesehen, erfordern die bekannten Anlagen ein übertriebenes Maß an manueller Tätigkeit für bestimmte Arbeitsabläufe, die nur für bestimmte Maßnahmen wie Betrieb des Fahrzeugs, Halterung des Gießmechanismus, Bedienung der Gießwasserzufuhr, Einstellung der Gießeinrichtung auf das zu behandelnde Objekt usw. tätig werden und für anders gelagerte Tätigkeiten nicht verfügbar sind.

Es ist daher Aufgabe der Erfindung, ein Verfahren und eine zur Durchführung des Verfahrens geeignete Vorrichtung zur Verfügung zu stellen, die eine vollkontinuierliche, gezielte und verlustfreie Bewässerung von Pflanzen, Sträuchern usw. auf engstem Raum, insbes. von in Reihen angelegten Blumen- und Baumkübeln z.B. in Alleen, Straßen, auf Bürgersteigen usw. ermöglicht, und dies praktisch ohne Verlust an Gießmedium (Wasser bzw. wässrige Lösung) in vorgegebener Zeitenfolge und bei schnellster, zeitlich optimaler Arbeitsweise im "Ein-Mann-Betrieb". Das Gießwasser bzw. die Gießlösung wird gezielt und mengenmäßig optimal eingestellt nur der behandelnden Pflanze aufgegeben; Bürgersteige, Gehwege, Parkplätze usw. werden dabei nicht betroffen. Eine Verschwendung von Wasser ist ausgeschlossen. Dies gilt auch und insbes. für am Straßen- oder Wegerand abgestellte bzw. parkende Fahrzeuge, die vom Spritz- bzw. Gießwasser nicht getroffen werden, den eigentlichen Gießprozess jedoch nicht unterbrechen können.

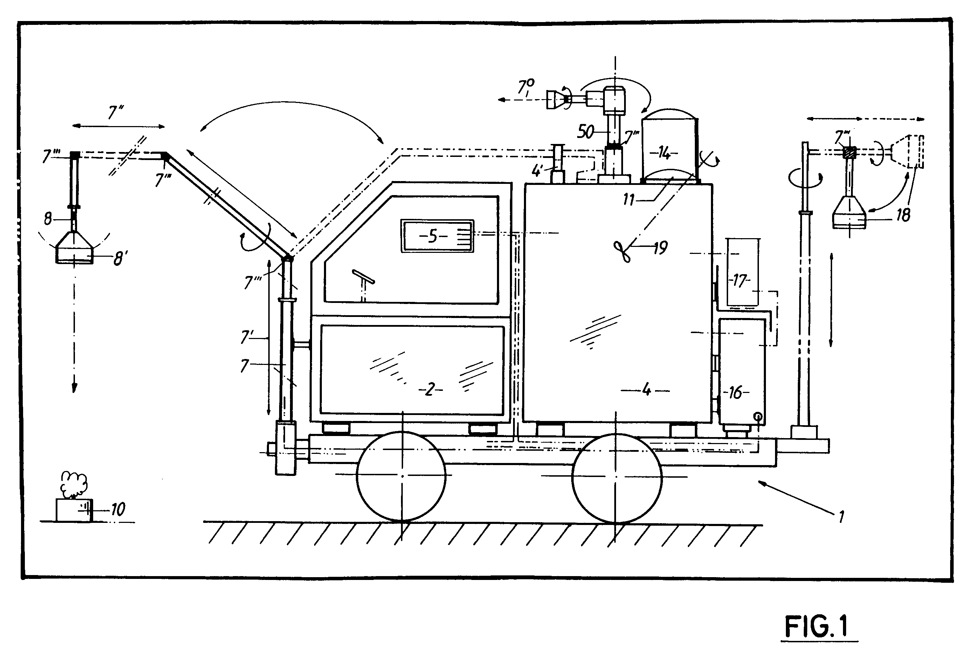

Das Verfahren und die hierzu geeignete Vorrichtung, wie sie in den Patentansprüchen zum Ausdruck kommen, wird nachfolgend anhand der Figuren 1 - 3 näher beschrieben, wobei solche Vorgänge und Mechanismen, die zum allgemeinen Wissen des Fachmanns gehören, weggelassen sind.

Gemäß Figur 1 wirkt die eigentliche Gieß- bzw. Sprühanlage insgesamt mit einem Fahrzeug (1) zusammen, das mit Verbrennungsmotor oder (bevorzugt) mit einem Elektromotor angetrieben wird. Im Prinzip handelt es sich um einen sogenannten Kleinlaster, bei dem der sonst übliche kastenförmige Aufbau über dem Chassis entfernt und durch einen Wasserbehälter (Tank) (4) sowie ein zusätzliches Aggregat aus Pumpe, Zwischenbehälter, Ventilen usw., ersetzt wurde. Die Kapazität des Tanks (4) richtet sich selbstverständlich nach der Tragfähigkeit des Fahrzeugs und dem erforderlichen Gießvolumen einer bestimmten Anzahl von Objekten. Das Fahrzeug (1) mit Aufbauten wird von der Fahrerkabine (2) gesteuert. Diese Steuerung gilt jedoch nicht nur für den eigentlichen Fahrbetrieb, sondern auch für alle Funktionen des Gieß- und Spritzsystems. Dies bedeutet, daß die gesamte Arbeitsweise der Anlage, neben der Fortbewegung im speziellen auch die Wasseraufnahme in den Tank (4) und die Wasserführung zum zu behandelnden Objekt (10), bei vorgegebener Menge und in vorgegebenen Zeitabständen -z.B. auch als Funktion von Wetterverhältnissen, Jahreszeit usw. - von der Fahrerkabine (2) geleitet wird.

Hierzu dient eine Leitstelle (5) mit Bordcomputer, Chipkarte und Drucker zur laufenden Überwachung, Steuerung und Protokollierung aller erforderlichen Daten, um zu jeder Zeit die für das spezielle Objekt (10) erforderliche Menge Gießwasser einstellen zu können.

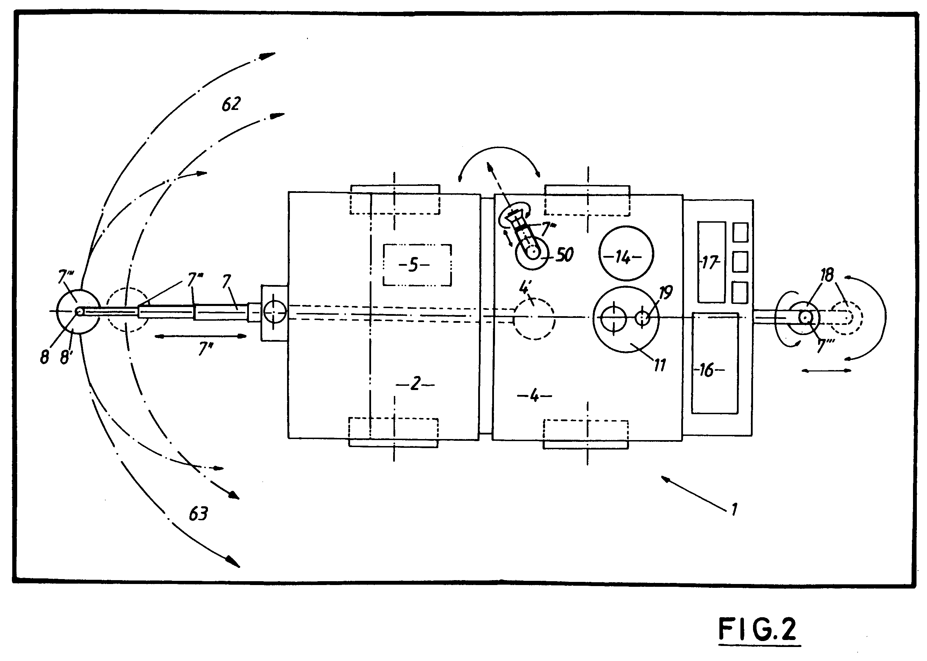

Vor der Fahrerkabine (2) -vgl. Fig. 1- und seitlich neben dem Fahrersitz (um die Sicht nicht zu behindern) ist in Höhe des Rahmens des Fahrzeugs (1) ein sogenannter Auslege- oder Schwenkarm (7) angebracht, der praktisch stufenlos und ohne Umstellarbeiten in Rechts- oder Linksauslage (62,63) -vgl. Fig. 2- gefahren werden kann. Weiter kann gleichzeitig oder auch getrennt von diesem Auslagevorgang eine Bewegung "Auf" oder "Ab" (Pfeil 7' in Fig. 1) sowie eine Bewegung "Vor" oder "Zurück" (Pfeil 7'' in Fig. 1) erfolgen. Knickbereiche des Schwenkarms (7) für vorstehende Bewegungen sind -rein statistisch- mit (7''') bezeichnet.

Dieser gesamte Bewegungsvorgang des gekröpften Auslegearms in beliebige Richtung und Höhe erlaubt den Betrieb der Anlage, ohne daß z.B. auf am Straßenrand parkende Fahrzeuge Rücksicht genommen werden muß, d.h. der Betrieb durch solche oder andere Hindernisse nicht gestört wird.

Der Auslege- oder Schwenkarm (7) wird -über eine spezielle Niederdruckhydraulik- von der Leitstelle (5) in der Fahrerkabine (2) gesteuert.

Die Flüssigkeit (Gieß- oder Sprühwasser, Düngerlösung usw.) führenden Teile am Auslegearm (7) werden durch die Auslegerkonstruktion selbst gebildet, sodaß keine Schläuche oder besondere außengeführte Leitungen vorhanden sind. Dies ist von besonderem Vorteil für die Beweglichkeit der Anlage und damit verbunden ein schnelles "in Stellung bringen", da außen geführte, locker angebrachte Schläuche höchst behinderlich sein könnten oder durch scheuern usw. leicht zerstört würden. An den in Fig. 1 gezeigten Knickpunkten (7''') wird die Gießflüssigkeit über massive Drehüberträger geführt.

Am Ende des Auslegearms (7) befindet sich ein Schwenkkopf (8), an den über Schnellkuppler verschiedene Wasserverteiler (8'), z.B. Sprühdüsen, Brauseköpfe usw., angebracht werden können. Außerdem kann der Schwenkkopf (8) mit einem einfachen Schlauch versehen sein, der entweder zu der jeweiligen Sprühdüse (8') weiterleitet -und dies beweglicher gestaltet- oder der selbst direkt zum Bewässern von z.B. Baumscheiben verwendet wird. Außerdem kann der Schwenkkopf beim Vorbeifahren, z.B. an Baumpfählen, leicht zur Seite gedreht werden. Es versteht sich, daß für die sogenannten Wasserverteiler (8') keine bestimmte Definition gegeben werden kann, da Begriffe wie Brausekopf, Sprühdüse usw. eindeutig den Zweck dieser variablen Verteiler für das Gieß- oder Sprühwasser vermitteln.

Wie bereits gesagt, wird die gesamte Steuerung des Gieß- bzw. Sprühbereichs (Auslegearm 7; Schwenkkopf 8; Sprühelement 8' usw.) von der Fahrerkabine (2) durch eine Person über Computer und hierdurch gesteuerte Regelelemente betrieben. Weiteres Personal ist nicht erforderlich; ein Aufenthalt von Arbeitern oder sonstigem Personal auf Straßen, Gehwegen entfällt.

Im übrigen kann der Auslegearm (7) mit Schwenkkopf (8) und evtl. angeschlossenem Sprühelement (8') beim An- oder Abfahren der Anlage (1) um 180° gedreht nach rückwärts auf den Tank (4) auf einen Träger (4') abgelegt werden, sodaß die Sicht des Fahrers bzw. Bedieners nach vorn völlig freigelegt wird und Versperrungen im Straßenbereich ausgeschlossen sind.

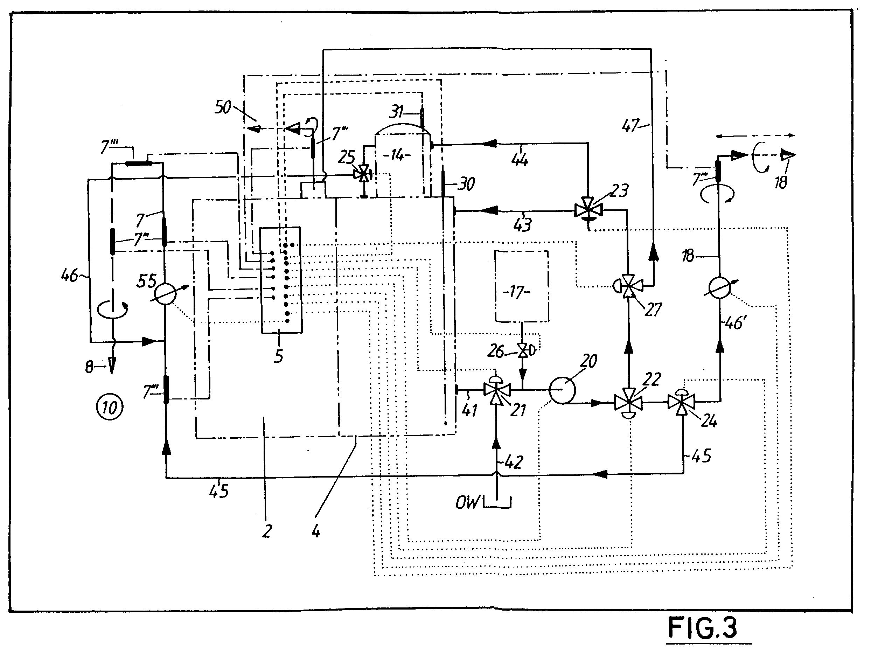

Auf dem Tank (4) abgesetzt befindet sich ein Mannloch (11) mit durchgeführtem Rührelement (19) zwecks Bewegung des Tankinhalts und Aufwirbelung von evtl. vorhandenen Bodensätzen sowie Vermischung mit Zusätzen wie Düngemitteln, Bodenverbesserern, Insektiziden usw.. Ebenfalls auf dem Tank (4) abgesetzt ist ein Messbehälter (14), dessen Funktion später beschrieben wird (vgl. Fig. 3).

Zum weiteren Aufbau der Anlage (1) gehört das Pumpenhaus (16) mit daneben oder darüber angeordnetem Zusatzbehälter (17) für die vorstehend erwähnten, evtl. erforderlichen Zusatzmittel wie Düngerlösungen usw..

Im rückwärtigen Bereich bzw. am Heck des Fahrzeugs (1) befindet sich eine Sprüheinheit (18), die -zusätzlich zur eigentlichen vorderen Gießanlage- zur gezielten großflächigen Bewässerung von Flächenanpflanzungen wie Gras usw. im über die eigentlichen Primärobjekte (10) hinausgehenden Abstand dient.

Dies gilt vor allem auch für Strauchanpflanzungen (beispielhaft) auf oder hinter Böschungen am Wege oder Straßenrand, die somit getrennt, d.h. unabhängig von den Objekten (10), oder auch gleichzeitig mit diesen behandelt werden können, ohne daß die Tätigkeit des nach vorne oder zu den Seiten des Fahrzeugs (1) gerichteten Sprühelements (8') dadurch gestört oder beeinflußt würde.

Die Sprüheinheit (18) ist -wie insbes. aus der Fig. 1 ersichtlich- mit einer "Auf" oder "Ab" Bewegung (vgl. Pfeil) sowie einer "Vor" und "Zurück" Bewegung ausgestattet. Sie ist als solche um 360° drehbar und mit Knickbereichen (7''') ausgestattet.

Schließlich befindet sich auf dem Tank (4) -ggf. auch auf der Fahrerkabine (2)- ein sogenannter Minispritzmonitor (50), d.h. eine Sprüheinrichtung mit verminderter Kapazität, die ähnlich wie die Hauptsprüheinheit (8,8') bzw. die rückwärtige Spritzeinheit (18) nach allen Seiten frei beweglich eingerichtet ist und die kleinere Bereiche seitlich vom Fahrzeug (1) erfaßt. Zu derartigen Bereichen gehören vor allem Verkehrsinseln, größere Baumscheiben ohne Gießrand und dgl.. Der Spritzmonitor kann mit unterschiedlichen Brause- oder Sprühköpfen ausgestattet sein. Er ist nach vorne über eine Teleskopeinrichtung (7°) ausziehbar und -wie bereits gesagt- wie die Einheiten (8,8',18) drehbar um die eigene Achse gelagert oder in Schräglage einstellbar. In diesem Zusammenhang sei darauf hingewiesen, daß als besonders geeignete Brause- bzw. Sprühköpfe (8,8',18,50) solche zur Anwendung kommen, die im Innern eine Art Propeller tragen, d.h. das eingebaute propellerförmige Laufrad wird vom Wasserstrahl über die Pumpkraft angetrieben und rotiert um seine Längsachse gleichmäßig über den gesamten Rohrquerschnitt. Dies bedeutet, daß der Wasserstrahl zunächst gebremst und durch die Rotationsbewegung des Propellers gleichmäßig über den gesamten Querschnitt des Rohrs bzw. der Düse verteilt wird. Dadurch entsteht an der Austrittsstelle ein pulsierender, sprudelnder Wasserstrahl ohne jeglich zerstörerische Einwirkung auf die empfindliche Bodenoberfläche. Ein Aufklatschen des Wassers auf den Boden oder die Pflanze entfällt. Ein Verspritzen wird vermieden.

Das bereits für die Steuerung bzw. Regelung der Beschickung bzw. Positionierung der vorderen Sprüh- und Gießanlage (7,7',7'',7''') Gesagte, d.h. die Menge an Gießwasser, die Zeitverhältnisse und der Gießort hinsichtlich Automatisierung über einen Bordcomputer (5) in der Fahrerkabine (2), gilt auch in gleichem Maße für die Regelung der Wasserzuführung vom Tank (4) zur Objektstelle (10). Ebenfalls gilt dies für die Bedienung der hinteren Sprüh- bzw. Spritzeinheit (18) und die seitlich orientierte sogenannte Minispritzanlage (50).

Zur Ausführung des gesamten Wassertransports dient zunächst eine einzige Pumpe (20) -vgl. Fig. 3- bzw. Pumpenhaus (16) gemäß Fig. 1 und 2, die alle Funktionen der Wasserein- und -ausbringung, Umwälzung -ggf. in Verbindung mit dem Rührwerk (19)-, Dosierung usw. übernimmt. Besonders bewährt haben sich hierfür Drehkolbenpumpen, da diese speziell für Schmutzwasser geeignet sind. Die Funktionsweise der Pumpe (20) und den Tank-Füllvorgang, die Beziehung zu den einzelnen Spritz- bzw. Gieß-Systemen (8,8',18,50) zeigt insbes. Fig. 3.

Primär steht die Pumpe (20) saugseitig über das gesteuerte Mehrwegventil (21) sowohl mit dem Tank (4)-über Leitung (41)- als auch mit der Frischwasserquelle (OW), z.B. einem Hydranten, Löschteich usw., über Leitung (42) in Verbindung.

Druck- bzw. förderseitig ist die Pumpe (20) über die ebenfalls gesteuerten Mehrwegventile (22,23) einmal über Leitung (43) mit dem Tank (4) -zwecks kontinuierlicher Wasserumwälzung durch Tank (4) und Leitungssystem (41,43)- und zum andern über Leitung (44) mit dem Meßbehälter (14) verbunden.

Weiter ist über Leitung (41), Mehrwegventil (21), Pumpe (20) und Mehrwegventil (22) bzw. (24) die Hauptzufuhrleitung (45) zum vorderen Gieß- bzw. Sprühelement (Ausleger 7 mit Einheiten 8,8) angeschlossen, wobei vom Mehrwegventil (24) auch die Leitung (46') zur rückwärtigen Spritzeinheit (18) abzweigt. Schließlich kann über Mehrwegventil (27) die Leitung (47) zum sogenannten seitlichen Gieß-System (50) erreicht werden.

Wie aus Fig. 3 hervorgeht, steht der Meßbehälter (14) (bevorzugt) nur mit der Druckleitung (41,44) bzw. -über Mehrwegeventil (25) mit der Leitung (46) in Verbindung. Dies dient der Speisung der Sprüh- bzw. Spritzleitung (45) zum vorderen Spritz- und Gieß-System (8,8'). Selbstverständlich kann der Meßbehälter (14) auch an die anderen Sprüh- bzw. Spritzsysteme (50) bzw. (18) angeschlossen werden, wozu in Fig. 3 nicht speziell hingewiesen wird.

Wie weiter aus Fig. 3 hervorgeht, sind alle beweglichen Elemente der Anlage, das sind Pumpe (20) und Mehrwegventile (21,22,23,24,25), direkt an die Leitstelle (5) in der Fahrerkabine (2) angeschlossen.

Diese Leitstelle besteht aus einem vollautomatischen Steuerungs- und Überwachungs- bzw. Datenerfassungssystem mit zwei unterschiedlichen Betriebsarten:
a) Bei der "Baumbewässerung" regelt ein Rechner insbes. die für den Ausleger (7) geltende bzw. einzustellende Wassermenge für das jeweilige Objekt (10), d.h. einen Baum oder einen Pflanzenkübel usw..
   Der Sollwert je Einheit wird vor Arbeitsbeginn eingegeben und nach erfolgter Positionierung der Düse (8) abgelassen. Dies kann sowohl über den Meßbehälter (14) als auch direkt über die Pumpe (20) durch entsprechende -vollautomatische- Einstellung der Mehrwegeventile erfolgen. Falls erforderlich , d.h. in Ausnahmefallen, kann der Bediener der Anlage in der Kabine (2) individuell die Wassermenge verändern bzw. anpassen bzw. den Zusatzbehälter (17) für Chemikalien usw. dazuschalten.
   Nach jeder abgeschlossenen Bewässerung eines Objekts (10) wird während der Weiterfahrt zum nächsten Objekt für dieses eine Einstellung vorgenommen, aus der sich Uhrzeit, Datum, Nummer des laufendes Objekts, erforderliche Wassermenge, Standort, d.h. navigatorische Daten u.a. über Satellitenpeilung ergeben.
b) Bei der "Flächenbewässerung", etwa über die Einheit (50) und (18), unterstutzt der Computer (5) den Fahrer in der Kabine (2) durch Ermittlung der Arbeitsbreite (Flächengröße und -maße), der Fahrgeschwindigkeit und der aktuellen Wassermenge bei der Einstellung der erforderlichen Pumpenleistung (20) und der Mehrwegventile.

Beide Systeme, d.h. (a) "Baum- bzw. Pflanzenbewässerung" und (b) "Flächenbewässerung" können gleichzeitig oder auch individuell -mit und ohne Einschaltung von Meßbehälter (14) und Zusatzbehälter (17)- betrieben werden.

In diesem Zusammenhang sei schließlich noch auf die besonders vorteilhafte, überraschende Anwendung des an sich bekannten Satelliten-Peilsystems (GPS) hingewiesen. Dieses System, das beim vorliegenden Verfahren bzw. der Anlage zum Einsatz kommt, ermittelt laufend und vollautomatisch, sowie auf wenige Teileinheiten von Entfernungsmetern exakt, genau den Standort des Fahrzeugs (1) in Beziehung zum Objekt (10), sodaß durch Auswertung -in Verbindung mit dem Computer (5)- automatisch die ein- bzw. auszuspeisende Wassermenge zum notwendigen Zeitpunkt erfolgt.

In bestimmten Fällen, insbes. bei kleineren Objekten, ist es zweckmäßig, die vom Bordcomputer ermittelte oder auch vom Personal in der Kabine (2) eingestellte Wassermenge über Mehrwegventil (23) und Leitung (44) in den Meßbehälter (14) einzufüllen -via Pumpe (20)- und diese Vorratsmenge bei Erreichen des Objekts (10) durch eigene Schwerkraft (Leitung 46) auf dem Objekt (10) abzulassen. Selbstverständlich kann dieses gelegentliche Verfahren auch zur Wasserspeisung der Spritz- bzw. Sprüheinheiten (18) und (50) eingesetzt werden. Hierauf ist in Fig. 3 nicht besonders Bezug genommen.

Wie bereits gesagt, gehören zur Gesamtanlage ein oder mehrere Zusatzbehälter (17), die Lösungen von Düngemitteln oder sonstige für die Behandlung der Pflanzen bzw. Objekte erforderliche Additive wie Insektizide, Fungizide, Wachstumsförderer usw. enthalten. Die Konzentration dieser Lösungen ist vor der Anwendung eingestellt und dem Computer eingegeben. Diese Lösungen werden in dosierten Mengen über das Ventil (22,24) in die Hauptleitung (45) oder über die Ventile (22,24) in die Leitung (46') für die Großflächenbewässerung (18) oder auch über die Ventile (22,23) dem Meßbehälter (14) - Leitung (44)- bzw. schließlich über Ventil (27) und Leitung (47) der Sprüh- bzw. Spritzeinheit (50) aufgegeben.

Schließlich gehören zur Gesamtanlage die Füllstandsanzeiger (30,31) für den Haupttank (4) und den Meßbehälter (14), die ebenfalls vom Bordcomputer bzw. der Leitstelle (5) überwacht werden.

Es versteht sich, daß in der dargestellten und beschriebenen Form nur die wesentlichen Elemente der Anlage bzw. Vorrichtung -und des Verfahrens zum Betrieb der Anlage- genannt bzw. spezifiziert sind. Auf übliche, dem Fachmann bekannte Hilfsaggregate wie Durchfluß- oder Mengen-Meßinstrumente, die spezielle Konstruktion der Sprüheinheiten (8'), des Schwenkkopfs (8), der Knickpunkte (7) am Ausleger (7) oder an den hinteren und seitlichen Sprühelementen (18) bzw. (50), die Ausgestaltung der Mehrwegventile und der Pumpe (20), sowie die Kapazität und Ausgestaltung der verschiedenen Behälter usw. wurde verzichtet, da diese Elemente dem Fachmann nicht unbekannt sind.

Dies gilt schließlich auch für die Konstruktion des sogenannten Bordcomputers bzw. der Leitstelle (5) als vollautomatisches Steuerungs-, Überwachungs- und Datenerfassungs-System, das alle relevanten Daten eines jeden Vorgangs erfaßt und über Papierstreifen oder Chipkarte vermittelt.

Wenngleich auch die vorstehend beschriebene Vorrichtung universell und in vielfacher Weise anwendbar ist, hat sie ihre besondere Bedeutung -und wurde für diesen Zweck bzw. diese Aufgabe entwickelt- für ein Verfahren zum vollautomatischen, gezielten, wassersparenden Begießen bzw. Tränken von Einzelobjekten, wie im Abstand voneinander angeordneten Bäumen, Sträuchern, Pflanzen, Blumenkübeln usw., wie sie insbesondere in Städten und Ortschaften, z.B. als Kulturen zur Straßenbegrenzung, Verkehrsberuhigung, in Alleen, an Wegen, sowie insgesamt in urbanen Anlagen anzutreffen sind.

Hier ist insbesondere der vor der Fahrerkabine (2) angeordnete sogenannte Ausleger oder Schwenkarm (7) angesprochen, der -wie bereits gesagt- stufenlos und ohne Umstellarbeiten in Rechts- oder Linksauslage gefahren werden kann und über eine spezielle Niederdruckhydraulik von der Leitstelle (5) in der Fahrerkabine (2) gesteuert wird.

Die Verfahrensweise gemäß der Erfindung unter Verwendung der eingangs beschriebenen Vorrichtung wird daher am Beispiel der Bewässerung von in Reihe mit Abstand angeordneten Einzelobjekten, z.B. Bäumen, Sträuchern, Kübeln usw. näher beschrieben.

### Beispiel:

Als erste Maßnahme wird vorn Fahrer in der Kabine (2) das zu behandelnde Objekt (Baum, Strauch usw.) anvisiert. Über einen Multifunktionshebel -nicht dargestellt- steuert der Fahrer u.a. folgende Arbeitseinheiten:
a) Ausleger (7) aus der Ruhelage (vgl. Fig. 2 (4')) nach vorne schwenken;
b) Ausleger (7) senken oder heben, nach links oder rechts verschwenken, d.h. insgesamt positionieren;
c) Ausleger (7) teleskopartig ausschwenken oder einziehen;
d) Schwenkkopf (8) je nach gestellter Aufgabe (senkrechtes Besprühen des Objektes (10) oder seitliches Bewässern des Objektes) schwenken;
e) Wassermenge einstellen (evtl. erhöhen oder reduzieren);
f) Bewässerungsautomatik bedienen, d.h. "start" oder "stop";
Die unter (a) und (b) beschriebenen Funktionen können wahlweise über sogenannte Proportionalventile gesteuert werden, die millimetergenau regulierbar sind, sie können hilfsweise auch durch Handbetrieb erfolgen.

Nach dieser Positionierung des Auslegers (7) und des Schwenkkopfs (8) setzt der Fahrer die über einen Rechner bestimmte Bewässerung in Betrieb, d.h. der Bordcomputer (Leitstelle 5) gibt den für den Wasserstrom bestimmten Weg frei. Dieser kommt über das jeweilige Ventilsystem (vgl. Fig. 3).

Dabei war während des Vorgangs der Positionierung die Pumpe (20) in Betrieb, d.h. vor der Betätigung des Bord-Computers wurde das Wasser im Kreislauf über den Wassertank (4) geführt (Ventilsystem 21,22,27,23). Nach Betätigung eines "start"-Tasters gelangt das Wasser über die Ventile (22,24) zum Schwenkkopf (8), wobei erneut die Wassermenge, d.h. die Ventilstellung, vom Computer geregelt wird. Ggf. kann über den Druchflußmengenmesser (55) die auszubringende Wassermenge zusätzlich, d.h. manuell bzw. visuell, überwacht werden.

Sobald die erforderliche Wassermenge ausgebracht bzw. abgelassen ist, öffnet die mit dem Computer verbundene Automatik das Ventilsystem für den Wasserkreislauf zurück zum Tank (4), bzw. sie schließt das Ventilsystem zum Objekt (10). Der Fahrer kann jedoch in diesen Vorgang beliebig eingreifen und den Wasserfluß -wenn erforderlich- erneuern bzw. variieren, insbes. kann er zusätzlich die Wassermenge erhöhen oder reduzieren.

Dem Fahrer werden auf einem Display ständig die aktuelle Objektnummer, z.B. bei Reihenpflanzungen, die erforderliche Durchfluß- bzw. Abgabemenge in der Zeiteinheit für das bestimmte Objekt und der Füllstand des Behälters (4) angezeigt. Gleiches gilt auch für die Zudosierung von z.B. anorganischen oder organischen Düngemitteln, Pestiziden, Insektiziden usw., die von dem bzw. den Zusatzbehälter(n) (17) und Ventil (26) in den zum Schwenkkopf (8) führenden Weg eingebracht werden.

Während der Weiterfahrt zum nächsten Objekt (10) wird der Gesamtvorgang auf einem Protokollausdruck (Drucker in der Fahrerkabine (2)) festgehalten. Bei einer Vielzahl hintereinanderfolgender Objekte, z.B. bei Alleenbepflanzungen, Baumreihen usw., bleibt im allgemeinen das Umwälzsystem von Behälter (4) über die Ventile (21,22,27,23) bzw. Pumpe (20) ständig in Betrieb, sodaß ein vielfaches An- und Abstellen der Pumpe (20) vermieden wird.

## Patentansprüche

1. Vorrichtung zur gezielten, wassersparenden Bewässerung von im Abstand voneinander angeordneten pflanzlichen Objekten wie Bäumen, Sträuchern, Blumenkübeln und -bottichen sowie benachbarten Grünflächen und -anlagen, wie sie an Wegen, Straßen, Alleen oder in urbanen Anlagen z.B. zur Verkehrsberuhigung und Wegebegrenzung anzutreffen sind, bestehend aus einem motorangetriebenen Fahrzeug (1) mit Fahrerkabine (2) und hinter dieser angeordnetem Wassertank (4), sowie einem im vorderen Bereich angeordneten beweglichen Schwenkarm (7), der an seinem Ende eine Spritz- oder Sprüheinheit (8/8') trägt, und der aus rohrförmigen, wasserführenden Teilen besteht, die durch Knickpunkte (7''') miteinander verbunden sind,
gekennzeichnet durch die Kombination folgender Merkmale:
a) der Schwenkarm (7) mit der Spritz- oder Sprüheinheit (8/8') ist in Höhe des vorderen Rahmens des Fahrzeugs (1) vor der Fahrerkabine (2) angebracht;
er ist hydraulisch und teleskopförmig auf- und abbeweglich (7') sowie in der Horizontalebene schwenkbar (62,63);
die Knickpunkte (7''') bestehen zwecks ungehinderter Wasserführung aus massiven Drehüberträgern;
der Schwenkarm (7) kann nach hinten auf dem Tank (4) oder der Fahrerkabine (2) abgelegt werden (4');
b) im rückwärtigen Bereich des Fahrzeugs (1) bzw. am Heck des Fahrzeugs (1) befindet sich eine zweite Spritz- oder Sprüheinheit (18), die wie die vordere Einheit hydraulisch und teleskopförmig auf- und abbeweglich, höhenverstellbar sowie in der Horizontalebene schwenkbar angeordnet ist;
c) auf dem Tank (4) oder auf der Fahrerkabine (2) befindet sich eine dritte Spritz- oder Sprüheinheit (50), die zu den Seiten des Fahrzeugs (1) hin alle Bewegungen ausführen kann wie die Einheiten (8/8',18),
wobei alle rohrförmigen Zeile der Schwenkarme (7) sowie jede Sprüheinheit (8/8',18,50) um ihre eigene Längsachse drehbar gelagert sind und in einen Spritz- oder Sprühkopf einmünden und alle beweglichen Elemente der Anlage, das sind der Antriebsmotor des Fahrzeugs, die Pumpe (20), die Mehrwegventile (21,22,23,24,25,26,27) sowie die Bewegungselemente der Spritz- und Sprüheinheiten (8/8',18,50) von einem Leitsystem erfaßt und durch dieses gesteuert werden.

2. Vorrichtung nach Anspruch 1,
dadurch gekennzeichnet, daß die Spritz- oder Sprüheinheit (8/8',18,50) an ihrem Ende in eine Rundbrause, Flächenbrause, Gießdüse oder Mehrarmdüse einmünden.

3. Vorrichtung nach Anspruch 2,
dadurch gekennzeichnet, daß innerhalb der Düsen ein durch den Wasserstrahl angetriebener Propeller oder Flügelarm angeordnet ist.

4. Vorrichtung nach Anspruch 1 - 3,
dadurch gekennzeichnet, daß auf dem Tank (4) ein Meßtank (14) angeordnet ist.

5. Vorrichtung nach Anspruch 4,
dadurch gekennzeichnet, daß auf dem Tank (4) ein Zusatzbehälter (17) angeordnet ist.

6. Vorrichtung nach Ansprüchen 1 - 5,
gekennzeichnet durch eine als Computer tätige Leitstelle (5).

7. Verwendung der Vorrichtung gemäß Ansprüchen 1 - 6 zur
gezielten, vollautomatischen und vollkontinuierlichen, verlustfreien Bewässerung von im Abstand angeordneten pflanzlichen Objekten wie Bäumen, Sträuchern, Blumenkübeln und -bottichen sowie benachbarten Grünflächen und -anlagen.

8. Verwendung des an sich bekannten Satelliten-Peilsystems zur Regelung und Steuerung der Daten für den Bordcomputer (5) bzw. der Schaltung des Pump-, Ventil- und Positioniersystems der Einzelelemente gemäß Vorrichtung nach Ansprüchen 1 - 6.

## Claims

1. Apparatus for selective water-saving irrigation of plants, which are spaced from one another, such as trees, shrubs, potted plants or plants in tubs, as well as neighbouring lawns and beds, which plants are to be found on paths, roads or avenues or in urban constructions, for example, for decreasing traffic or forming path boundaries, comprising a motor-driven vehicle (1) with a driver's cabin (2) and, behind the cabin, a water tank (4), as well as a movable pivoted arm (7) arranged at the front end of the vehicle, the pivoted arm cyrrying a spray unit (8,8') at its end, the pivoted arm consisting of pipe-like water carrying parts which are connected by articulated joints (7''') characterised in the combination of the following features:
(a) the pivoted arm (7) with the spray unit (8,8'7 is located at the height of the front frame of the vehicle (1) in front of the driver's cabin;
it is hydraulically and telescopically movable up and down (7') as well as being pivotable in a horizontal plane (62,63);
the articulated joints (7''') consist of massive totatable connectors for ensuring unhindered water flow;
the pivoted arm (7) can rest towards the rear on the tank (4) or on the driver's cabin (2);
(b) a second spray unit (18) is located at the rear region of the vehicle (1), for example on the vehicle's guidance system, the second spray unit being hydraulically and telecopically movable up and down and also pivotable in a horizontal plane in a similar manner to the front unit;
(c) a third spray unit (50) is located on the tank (4) or on the driver's cabin (2), the third spray unit being able to effect all the movements of the units (8,8';18) towards the side of the vehicle (1)
whereby all the pipe-like parts of the pivoted arms and each spray unit (8,8'; 18; 50) are mounted to be rotatable about their own longitudinal axis and lead to a spray head and all movable parts of the apparatus, these being the vehicle driving motor, the pump (20), the multiway valves (21,22,23, 24,25,26,27) as well as the moving elements of the spray units (8,8';18;50) are included within and controlled by a control system.

2. Apparatus according to claim 1
characterised in that the spray units (8,8';18;50) lead to, at their ends, a circular spray head, a flat spray head, a watering jet or a multiarmed jet.

3. Apparatus according to claim 2
characterised in that a propellor or blade, driven by the water stream, is arranged inside the jets.

4. Apparatus according to claims 1 - 3
characterised in that a measuring tank (14) is arranged on the tank (4).

5. Apparatus according to claim 4
characterised in that an additive container (17) is arranged on the tank (4).

6. Apparatus according to claims 1 - 5
characterised by a control system operated by a computer.

7. Use of an apparatus according to claims 1 - 6 for selective completely automatic and completely continous loss-free irrigation of plants, which are spaced from one another, such as trees, shrubs, potted plants or plants in tubs, as well as neighbouring lawns.

8. Use of a known satellite location system for regulating and controlling the data of an on-board computer, for example the switching of the pump, valve and positioning systems of the individual components according to the apparatus of claims 1 - 6.

## Revendications

1. Dispositif pour l'arrosage ciblé et à consommation réduite en eau d'objets végétaux sèparés les uns des autres tels que des arbres, des arbustres, des tonneaux á fleurs, de même que des surfaces et installations en pelouse avoisinantes, comme on en trouve le long des chemins, des rues, des allées ou dans des installation urbaines par example pour freinez le traffic ou d'elimination des chemins, consistant en un véhicule motorisé (1) avec cabine de conduite (2) et reservoir d'eau (4) disposé â l'arrière de cette dernière, et aussi d'un bras pliante (7) situé sur la partie avant, qui porte à son extrémité une unité d'arrosage ou de pulvérisation (8/8') et qui est constitué par des parties tubulaires transportant l'eau qui sont reliées entre elles par des fonctions pliables (7'''), caractérisé par la combination des caracteristiques suivantes:
a) le bras pliant (7) avec son unité d'arrosage ou de pulverisation (8/8') est disposé à la l'auteur du chassis antérieur du véhicule (1) à l'avant de la cabine de conduite (2);
il peut être déplacé vers le haut et le bas (7') hydrauliquement et télescopiquement, et pliable dans le plan horizontal (62,63);
les fonctions pliables (7''') se composent d'éléments massifs de mise en rotation de façon à ne pas gêner le transport d'eau;
le bras pliant (7) peut être disposé vers l'arriere (4') sur le réservoire (4) ou la cabine de conduite (2);
b) sur la partie arrière du véhicule (1) et le cas à l'arrière de celui-ci est située une deuxième unité d'arrosage ou de pulvérisation (18), qui est comme l'unité antérieur displaceable vers le haut et le bas hydrauliquement et telescopiquement, réglable en l'hauteur ainsi que pliable dans le plan horizontal;
c) sur le reservoir (4) ou sur la cabine de conduit (2) se trouve une troisième unité d'arrosage ou de pulvérisation (50), qui peut effectuer sur les cotés du vehicule (1) toutes les manoeuvres prévues pour les unités (8/8',18), et où toutes les parties tubulaires du bras pliant (7) et chaque unité d'arrosage (8/8', 18, 50) sont montées en rotation autour de leur axe longitudinal respectif, et debouchent dans une tête d'arrosage ou de pulvérisation, et où tous les éléments mobiles du dispositif, qui sont le moteur d'entrainement du vehicule, la pompe (20), les vannes multiples (21,22,23, 24,25,26,27) ainsi que les organes de déplacement des unités d'arrosage et de pulvérisation (8/8', 18, 50) sont reliés à un système de guidage et commandés par ce dernier.

2. Dispositif selon la revendication 1,
caractérisé en se que l'unité d'arrosage ou de pulverisation (8/8', 18, 50) débouche à son extrémité dans une pomme circulaire d'arrosage, une téte plane d'arrosage, une buse d'arrosage ou un systême d'injection à branches multiples.

3. Dispositif selon la revendication 2,
caractérisé en se que l'on dispose à l'enterieur des buses une hélice ou un bras à ailettes entrainés par la circulation d'eau.

4. Dispositif selon l'une des revendications 1 - 3,
caractérisé en se que l'on dispose un réservoir doseur (14) sur le réservoir (4).

5. Dispositif selon la revendication 4,
caractérisé en se que l'on dispose un récipient additionnel (17) sur le réservoir sur le réservoir (4).

6. Dispositif selon l'une des revendications 1 - 5,
caractérisé en se que le système de guidage fait fonction de computeur.

7. Utilisation du dispositf selon les revendications 1 - 6 pour l'arrosage ciblé, entièrement automatique, entièrement en continue et sans pertes, d'objets végétaux tels que des arbres, des arbustres, des tonneaux á fleurs, de même que des surfaces et installations en pelouse avoisinantes.

8. Utilisation d'un système radiogoniométrique comme en soi pour réguler et commander les données pour les computeurs de bord (5) et respectivement la marche du système de pompe, de vannes et de positionnement des differents éléments du dispositif selon les revendications 1 - 6.
